(19) Europäisches Patentamt
European Patent Office
Office européen des brevets

(11) **EP 1 975 137 B1**

(12) **EUROPEAN PATENT SPECIFICATION**

(45) Date of publication and mention
of the grant of the patent:
**07.03.2012 Bulletin 2012/10**

(51) Int Cl.:
***C04B 35/01*** (2006.01)

(21) Application number: **08250248.5**

(22) Date of filing: **18.01.2008**

(54) **Ceramic sheet and method for producing crystallographically-oriented ceramic**

Keramikscheibe und Verfahren zur Herstellung einer kristallographisch ausgerichteten Keramik

Feuille de céramique et méthode pour la production de céramique à orientation cristallographique

(84) Designated Contracting States:
**DE FR GB**

(30) Priority: **26.02.2007 JP 2007045340**
**20.07.2007 JP 2007188954**
**31.10.2007 JP 2007283184**
**13.07.2007 JP 2007185036**
**31.10.2007 JP 2007283185**

(43) Date of publication of application:
**01.10.2008 Bulletin 2008/40**

(60) Divisional application:
**11162966.3 / 2 351 720**

(73) Proprietor: **NGK Insulators, Ltd.**
**Nagoya-shi, Aichi 467-8530 (JP)**

(72) Inventors:
 • **Yokoyama, Shohei**
**Nagoya-City**
**Aichi-ken, 467-8530 (JP)**
 • **Kobayashi, Nobuyuki**
**Nagoya-City**
**Aichi-ken, 467-8530 (JP)**

 • **Nanataki, Tsutomu**
**Nagoya-City**
**Aichi-ken, 467-8530 (JP)**
 • **Urakawa, Akira**
**Nagoya-City**
**Aichi-ken, 467-8530 (JP)**

(74) Representative: **Paget, Hugh Charles Edward et al**
**Mewburn Ellis LLP**
**33 Gutter Lane**
**London**
**EC2V 8AS (GB)**

(56) References cited:
**EP-A- 1 675 192 US-A- 4 710 227**
**US-A- 5 089 455 US-A1- 2006 066 180**

 • **SAITO ET AL: "Synthesis of polycrystalline platelike KNbO3 particles by the topochemical micro-crystal conversion method and fabrication of grain-oriented (K0.5Na0.5)NbO3 ceramics" JOURNAL OF THE EUROPEAN CERAMIC SOCIETY, ELSEVIER SCIENCE PUBLISHERS, BARKING, ESSEX, GB, vol. 27, no. 13-15, 1 January 2007 (2007-01-01), pages 4085-4092, XP022143699 ISSN: 0955-2219**

**Description**

Technical Field

The present invention relates to a ceramic sheet and to a method for produicing a crystallographically-oriented ceramic. More particularly, the invention relates to piezoelectric/electrostrictive ceramic sheets.

Background Art

To date, piezoelectric ceramics whose properties are improved by aligning the orientations of tabular grains have been proposed. For example, a piezoelectric ceramic having crystal grains whose grain diameters in a width direction are larger than those in a thickness direction when observed in a cross section in the thickness direction has been proposed (refer to Japanese Unexamined Patent Application Publication Nos. 2006-185940 and 2006-185950). Furthermore, piezoelectric ceramics whose piezoelectric properties are further improved by increasing the degree of orientation of a specific crystal plane in the crystals have been proposed. For example, a piezoelectric ceramic which is produced by adding a guest material and an additive to a host material whose grains are tabular and in which a specific crystal plane is grown, and forming the mixture so that the host material is oriented, followed by sintering under heating has been proposed (refer to Japanese Unexamined Patent Application Publication Nos. 11-60333 and 2003-12373).

Saito et al (Journal of the European Ceramic Society 27 (2007) 4085-7092) describe a topochemical micro-crystal conversion (TMC) method for the manufacture of polycrystalline rectangular-platelike $KNbO_3$ particles with an orthorhombic perovskite structure. The TMC-synthesised $KNbO_3$ particles exhibited a polycrystalline morphology having a preferred pseudo-cubic {001} orientation. Using these particles as a template in the reactive template grain growth method, grain-orientated $(K_{0.5}Na_{0.5})NbO_3$-1 mol% CuO ceramics having a pseudo-cubic {001} orientation degree (Lotgering's factor) of 39.7% could be fabricated.

Disclosure of the Invention

Each of Japanese Unexamined Patent Application Publication Nos. 2006-185940 and 2006-185950 describes that the intended piezoelectric ceramic material is flat. However, an increase in the degree of crystallographic orientation is not taken into consideration. Furthermore, Japanese Unexamined Patent Application Publication No. 11-60333 describes that the material whose grains are tabular and in which a specific crystal plane is grown has a composition having a layered perovskite structure. However, other compositional properties are not taken into consideration. Therefore, a desired composition may not be obtained in some cases. According to Japanese Unexamined Patent Application Publication No. 2003-12373, in a composition having a layered perovskite structure, after tabular crystals are obtained, by partially substituting the composition, a host material composed of desirable elements is synthesized. In some cases, the substitution reaction may not proceed sufficiently and undesirable elements may remain in the resulting piezoelectric material. Moreover, the process is cumbersome.

Other examples of known techniques for increasing the degree of crystallographic orientation include a method in which a thin film is formed on a substrate by sputtering, CVD, a sol-gel process, or the like; an epitaxy technique utilizing lattice matching with a surface of a substrate; and self-texturing in which a specific crystal plane is oriented due to the difference in the surface energy or the difference in the supply of atoms, irrespective of the crystallographic orientation of a substrate. However, in any of the techniques described above, since an intended piezoelectric material is in close contact with the substrate, it is very difficult to separate the piezoelectric material from the substrate. As described above, in the known methods, it is not possible to easily produce a piezoelectric ceramic which is planar, in which crystal planes are oriented in preferred directions, and which has a homogeneous composition.

The present invention has been achieved in consideration of the problems described above. An object of the invention is to provide a ceramic sheet having a higher degree of crystallographic orientation. Another object the invention is to provide a ceramic sheet having a more homogeneous composition. Another object of the invention is to provide a ceramic sheet in which the degree of crystallographic orientation can be increased by simpler processing.

In order to at least partially achieve the above-mentioned objects, the present inventors have made an attempt in which inorganic particles are formed into a self-supported, planar shaped body with a thickness of 10 $\mu$m or less, and the shaped body is fired with or without an inactive layer which does not substantially react with the shaped body being disposed adjacent to the shaped body. As a result, it has been found that the degree of orientation of crystals contained in the sheet can be further increased, and thus the present invention has been completed.

By the present invention, there is provided a ceramic sheet as set out in claim 1..

Preferably, the crystal grains having an aspect ratio of 3 or more.

The invention also provides a method of producing a crystallographically-oriented ceramic as set out in claim 9.

In the ceramic sheets according to the present invention, since inorganic particles are formed into a shaped body which is self-supported and planar and which has a thickness of 10 $\mu$m or less and the shaped body is fired, it is possible to increase the degree of crystallographic orientation by simpler processing. Furthermore, since it is not necessary to add an additive or the like or to involve a composition containing undesired elements, a ceramic sheet having a more homogeneous composition can be obtained. Note that the expression "it is not necessary to add an additive or the like" does not exclude a case in which the degree of orientation is further increased by addition of an additive in the present invention.

Brief Description of the Drawings

Fig. 1A is a side view which schematically shows a firing apparatus, and Fig. 1B is a cross-sectional view taken along the line A-A of Fig. 1A;
Fig. 2 shows an X-ray diffraction pattern in Experimental Example 4;
Fig. 3A is a SEM photograph showing a sheet surface, and Fig. 3B is a SEM photograph showing a fracture cross section in Experimental Example 4;
Fig. 4 is a graph showing the relationship between the aspect ratio of crystals included in each ceramic sheet and the degree of orientation measured by the Lotgering method;
Fig. 5 is a graph showing the relationship between each of the degree of orientation and the aspect ratio and the A/B value;
Fig. 6 shows an X-ray diffraction pattern in Experimental Example 12;
Figs. 7A and 7B are SEM photographs in Experimental Example 12;
Figs. 8A to 8D are views schematically showing steps in a process for producing a crystallographically-oriented ceramic by stacking ceramic sheets; and
Fig. 9 is a SEM photograph showing a crystallographically-oriented ceramic produced from a laminate.

Description of the Preferred Embodiments

In a ceramic sheet according to the present invention, the thickness of the sheet is 10 $\mu$m or less, a surface of the sheet, which is a surface having a larger area, includes a specific crystal plane, and the number of crystal grains present in the thickness direction of the sheet at any one point is substantially one (as herein explained). Although the thickness of the ceramic sheet is specified to be 10 $\mu$m or less, the thickness of the sheet is preferably 5 $\mu$m or less, and more preferably 2 $\mu$m or less. Furthermore, the thickness of the sheet is preferably 0.1 $\mu$m or more. If the thickness of the sheet is 0.1 $\mu$m or more, a self-supported planar sheet can be easily formed. If the thickness of the sheet is 5 $\mu$m or less, the degree of orientation can be further increased. In this description, the term "self-supported sheet" is defined as a sheet obtained by firing a sheet-like shaped body formed with a thickness of 10 $\mu$m or less, and does not include a sheet which is stacked on another sheet and fired, a sheet which is bonded on a substrate and fired, or a film formed by sputtering, a sol-gel process, aerosol deposition, printing, or the like on a substrate and supported by the substrate. Note that the "self-supported sheet" includes a sheet that has been bonded or formed on a substrate and separated from the substrate before or after firing.
In crystal grains contained in the ceramic sheet of the present invention, the crystal grain length in a direction parallel to the surface of the sheet is larger than the crystal grain length in the thickness direction. In such a structure, the crystal grains are easily oriented. Furthermore, the aspect ratio of the crystal grains is preferably 2 or more, more preferably 3 or more, and most preferably 4 or more. If the aspect ratio is 2 or more, the crystal grains are easily oriented. Furthermore, the aspect ratio is preferably 100 or less. The aspect ratio is determined by the method described below. First, a SEM photograph is taken by a scanning electron microscope, and the thickness of the ceramic sheet is determined from the SEM photograph. Next, the sheet surface of the ceramic sheet is observed, and in a field of view which includes about 20 to 40 crystal grains, an area S per grain is calculated using the formula {(area of the field of view)/(number of grains)}. Assuming that each grain has a circular shape, a grain diameter is calculated using equation (1) below. The value obtained by dividing the grain diameter by the thickness of the sheet is defined as the aspect ratio.

$$\text{Grain Diameter} = 2\sqrt{S/\pi} \quad \cdots \text{Equation (1)}$$

In the ceramic sheet of the present invention, the degree of orientation of the specific crystal plane measured by the Lotgering method is 30% or more. The degree of orientation of 30% or more is sufficient, for example, to obtain a crystallographically-oriented ceramic by crushing the ceramic sheet and forming the crushed ceramic into a shaped body such that the crystal grains have a secondary orientation. This is because the degree of crystallographic orientation can be further increased when the secondary orientation is performed. More preferably, the degree of orientation is 60% or more. Thereby, higher properties can be obtained. The specific crystal plane may be the pseudocubic (100) plane in the surface of the ceramic sheet. The term "pseudocubic (100)" means that although an isotropic perovskite-type oxide has a structure, such as a tetragonal, rhombic, or trigonal structure, which is slightly distorted from the cubic structure, since the amount of distortion is very small, the pseudocubic structure is considered to be a cubic structure and designated by the Miller indices. Here, in the measurement of the degree of orientation by the Lotgering method, XRD diffraction patterns of an intended ceramic sheet are measured and the degree of orientation is obtained using equation (2) below. In equation (2), $\Sigma I(HKL)$ is the sum of X-ray diffraction intensities of all crystal planes (hkl) measured in the ceramic sheet; $\Sigma I_0(hkl)$ is the sum of X-ray diffraction intensities of all crystal planes (hkl) measured in a non-oriented ceramic sheet having the same composition as the ceramic sheet; $\Sigma' I(HKL)$ is the sum of X-ray diffraction intensities of crystallographically equivalent specific crystal planes (e.g., (100) plane) measured in the ceramic sheet; and $\Sigma' I_0(HKL)$ is the sum of X-ray diffraction intensities of specific crystal planes measured in a non-oriented ceramic sheet having the same composition as the ceramic sheet. In the measurement of XRD diffraction patterns, when a ceramic sheet has waviness, measurement is performed after reducing the thickness of the ceramic sheet to the lowest wave height. Furthermore, when reducing the thickness is difficult, such as in the case where a ceramic sheet is roll-shaped, the ceramic sheet is crushed to such an extent that the aspect ratio is not less than 3 to obtain a crushed material. The crushed material is placed in a solvent, such as an alcohol, in an amount of 1% to 10% by weight, and dispersed, for example, using an ultrasonic wave for 30 minutes. The dispersion liquid is dispersed on a substrate made of glass or the like, in the form of a thin layer by spin-coating at 1,000 to 4,000 rpm such that the crystal grains are prevented from overlapping each other as much as possible and that the crystal planes included in the crushed material are in parallel to the surface of the substrate. XRD diffraction patterns are measured in such a state.

$$\text{Degree of orientation} = \cfrac{\cfrac{\Sigma' I(HKL)}{\Sigma I(hkl)} - \cfrac{\Sigma' I_0(HKL)}{\Sigma I_0(hkl)}}{1 - \cfrac{\Sigma' I_0(HKL)}{\Sigma I_0(hkl)}} \times 100 \ \% \quad \cdots \text{ Equation (2)}$$

In the ceramic sheet of the present invention, the number of crystal grains present in the thickness direction of the sheet at any one point is substantially one (as herein explained). The reason for this is that since the thickness of the ceramic sheet is 10 $\mu$m or less, grains grow to a height substantially corresponding to the thickness of the sheet. In the ceramic sheet, since the material present in the thickness direction of the sheet is limited, when grain growth occurs due to firing or the like, the number of crystal grains present in the thickness direction of the sheet at any one point is substantially one. Furthermore, since grain growth is promoted in the surface direction of the sheet rather than the thickness direction of the sheet, flat crystal grains are aligned in the surface direction of the sheet and a specific crystal plane is oriented in the surface direction of the sheet. Here, the expression "the number of crystal grains present in the thickness direction of the sheet at any one point is substantially one" means that even if crystal grains overlap in some part, in most parts of the ceramic sheet, crystal grains do not overlap and the number of crystal grains present in the thickness direction of the sheet at any one point is only one". This does not cover the case where in most parts of the ceramic sheet, such as in the center region, two or more crystal grains overlap with each other, and only in the end region, the number of crystal grains present in the thickness direction of the sheet at any one point is one. In the ceramic sheet of the present invention, crystal grains may overlap or the crystal planes of the crystal grains may be oriented in different directions locally in some part because crystal grains do not reach the extremity of the thickness direction of the ceramic sheet during grain growth or crystal planes are oriented in different directions. However, generally, the number of crystal grains present in the thickness direction at any one point is only one. In the ceramic sheet, the percentage of the portion which includes only one crystal grain in the thickness direction at any one point is 70% or more, more preferably 80% or more, and most preferably 90% or more, in terms of area ratio. In the ceramic sheet, the percentage of the portion in which crystal grains overlap is a fraction of the whole (e.g., 30% or less in terms of area ratio), and at grain boundaries where crystal grains are joined together, such a portion can be relatively easily separated by crushing.

In the ceramic sheet of the present invention, preferably, the crystal grains include an oxide represented by general formula $ABO_3$ as a main component, wherein the A site contains at least one element selected from the group consisting of Li, Na, K, Bi, and Ag, and the B site contains at least one element selected from the group consisting of Nb, Ta, and Ti. Particularly preferably, the oxide is $(Li_X Na_Y K_Z)Nb_M Ta_N O_3$, $(Bi_X Na_Y K_Z Ag_N)TiO_3$, or the like (wherein X, Y, Z, M, and N are arbitrary numbers). Thereby, at a thickness of 10 $\mu$m or less, crystal grains are easily obtained. The crystal grains may contain an element other than those described above. Here, in the crystal grains before firing (i.e., before the firing step which will be described below), the A/B is preferably 1.0 to 1.1. In the oxide represented by general formula $ABO_3$, when the A/B is in the range of 1.0 to 1.1, the aspect ratio and the degree of orientation can be increased. Examples of the oxide represented by general formula $ABO_3$ have been described above. Other examples that can be used in the present invention include an oxide, such as $Al_2O_3$, $ZrO_2$, $TiO_2$, MgO, CaO, $Y_2O_3$, $SnO_2$, ZnO, or $SiO_2$; a compound oxide, such as PZT, $BaTiO_3$, $BiFeO_3$, or $YBa_2Cu_3O_7$; a nitride, such as AlN, $Si_3N_4$, or BN; a boride, such as $CaB_6$, $MgB_2$, or $LaB_6$; a carbide, such as TiC, SiC, or WC; a tellurium compound, such as $Bi_2Te_3$, $Bi_2Sb_8Te_{15}$, or PbTe; a silicide-based material, such as $CrSi_2$, $MnSi_{1.73}$, $FeSi_2$, or $CoSi_2$; and a metal, an alloy, an intermetallic compound, or the like. Alternatively, the crystal grains may include an oxide represented by general formula $ABO_3$ as a main component, wherein the A site contains Pb, and the B site contains at least one element selected from the group consisting of Mg, Zn, Nb, Ni, Ti, and Zr.

In the ceramic sheet of the present invention, the crystal grains may be composed of inorganic particles that grow into crystal grains with an isotropic and polyhedral shape, or may be composed of inorganic particles that grow into crystal grains with an anisotropic shape. Preferably, the crystal grains are composed of inorganic particles that grow into crystal grains with an isotropic and polyhedral shape. The fact that the inorganic particles grow into crystal grains with anisotropic and polyhedral shape suggests the possibility that a specific crystal plane may be grown depending on the situation. Here, even if inorganic particles that grow into crystal grains with an isotropic and polyhedral shape are included, since grain growth in the thickness direction of the sheet is limited and grain growth is more promoted in the surface direction of the sheet, a specific crystal plane grows in the surface of the sheet, and thus the aspect ratio and the degree of orientation are increased. Among the polyhedral shapes, a hexahedral shape is most preferred. In the case of a hexahedron, in grains having two faces parallel to the surface of the sheet, four faces other than the two faces are included as the growing planes in all directions in a shaped body. Thus, grain growth occurs isotropically, and the remaining two faces present in the surfaces of the sheet expand naturally. Consequently, it is possible to easily obtain grains having a large aspect ratio, which is preferable. Furthermore, the crystal grains are preferably composed of an oxide having a perovskite structure. In some oxides having the perovskite structure, grains grow into a pseudocubic structure in the shape of a dice. The (100) plane grows along the surface of the sheet and the (100) crystal plane is easily oriented in a direction perpendicular to the surface of the sheet, which is preferable. On the other hand, even when the crystal grains are composed of inorganic particles that grow into crystal grains with an anisotropic shape, since grain growth in the thickness direction of the sheet is limited and grains grow in a direction parallel to the surface of the sheet. Thus, the aspect ratio and the degree of orientation are increased.

A method for producing a ceramic sheet according to the present invention includes (1) a preparation step of preparing inorganic particles which are raw materials for a the ceramic sheet, (2) a shaping step of forming the inorganic particles into a sheet, and (3) a firing step of the shaped sheet. The individual steps will be described below in that order.

(1) Preparation step of preparing inorganic particles

Examples of inorganic particles that can be used for the ceramic sheet include inorganic particles that grow into crystal grains with an anisotropic shape under predetermined firing conditions, namely, the growth form under predetermined firing conditions is crystal grains with an anisotropic shape; and inorganic particles that grow into crystal grains with an isotropic and polyhedral shape under predetermined firing conditions, namely, the growth form under predetermined firing conditions is crystal grains with an isotropic and polyhedral shape. In the present invention, since a sheet-like shaped body with a thickness of 10 $\mu$m or less is fired to cause grain growth, grain growth in the thickness direction of the shaped body is limited, and grain growth is more promoted in the surface direction of the sheet. Therefore, it is possible to form a ceramic sheet using inorganic particles that grow into crystal grains with an isotropic and polyhedral shape, for example, a cube. Here, the expression "growth form under predetermined firing conditions" is defined as the morphology observed when crystals of inorganic particles come to equilibrium with each other under given heat-treating conditions, which is, for example, obtained by observing the shape of grains at a bulk surface when it is crystallized by firing. Furthermore, the term "anisotropic shape" refers to a shape in which the ratio of major axis length to minor axis length (aspect ratio) is large (e.g., with an aspect ratio of 2 or more), such as a tabular, strip-like, columnar, needle-like, or flake-like shape. Furthermore, the "isotropic and polyhedral" shape means, for example, a cubic shape. In general, with respect to the morphology of crystal grains formed by grain growth, if the grain growth temperature is sufficiently low, for example, 400°C or less, compared with the melting point or decomposition temperature of the solid, the crystal grains are virtually spherically-shaped. In spite of the fact that intrinsically, the atom arrangement is anisotropic and the growth rate differs depending on the crystal plane, grains grow into a spherical shape. The reason for this is that atoms of solids are very difficult to move. On the other hand, if the grain growth temperature is close to the melting point or decomposition temperature of the solid, for example, if the difference in temperature is 200°C or less, the movement of atoms at the surface of growing grains becomes active, and surface morphology resulting from the crystal structure appears. That is, as grains grow, a difference occurs in the growth rate depending on the crystal plane. Slowly growing crystal planes develop, while rapidly growing crystal planes diminish or disappear. The morphology determined by the difference in plane growth rate is referred to as the growth form. In order to achieve an anisotropic shape or polyhedral shape as the growth form, in addition to the material in which grain growth temperature is close to the melting point or decomposition temperature of the solid as described above, a system in which a low-melting-point compound, such as glass, is added as a flux and grains are grown through the flux is preferably selected. The reason for this is that by adding the flux, the movement of elements constituting the solid at the surface of grains becomes active. As the inorganic particles that grow into a polyhedral shape, inorganic particles that grow into a hexahedral shape can be used. In the case of a hexahedron, in grains having two faces parallel to the surface of the planar sheet, four faces other than the two faces are included as the growing planes in all directions in a shaped body. When grain growth occurs isotropically, the two faces present in the surfaces of the sheet expand naturally. Consequently, it is possible to easily obtain grains having a large aspect ratio, which is preferable. For the same reason, a columnar shape, such as a hexagonal columnar shape or octagonal columnar shape, may also be used. Additionally, in order to obtain crystal grains having a large aspect ratio, an additive which accelerates grain growth may be used. Preferably, the inorganic particles form an oxide having a perovskite structure. Furthermore, preferably, crystals formed after firing are composed of an oxide represented by general formula $ABO_3$, wherein the A site contains at least one element selected from the group consisting of Li, Na, K, Bi, and Ag, and the B site contains at least one element selected from the group consisting of Nb, Ta, and Ti. For example, when inorganic particles which form $NaNbO_3$ in which part of the A site is replaced with Li, K, or the like and part of the B site is replaced with Ta or the like, i.e., $(Li_XNa_YK_Z)Nb_MTa_NO_3$ (wherein X, Y, Z, M, and N are arbitrary numbers), are used, the growth form at 900°C to 1,300°C is a cubic shape, which is preferable. An element other than those described above may be added. Furthermore, in inorganic particles which form crystals having $(Bi_{0.5}Na_{0.5-x}K_x)TiO_3$ as a main component, when X > 0.01, the growth form is a cubic shape, which is preferable. Furthermore, inorganic particles which form crystals including an oxide represented by general formula $ABO_3$, wherein the A site contains Pb as a main component and the B site contains at least one element selected from the group consisting of Mg, Zn, Nb, Ni, Ti, and Zr are also preferable. Furthermore, when glass having a melting point of 1,000°C or lower, such as lead borate glass, zinc borate glass, borosilicate glass, lead silicate glass, zinc silicate glass, or bismuth silicate glass, is added as a flux in an amount of 0.1% by weight or more, the growth form at 900°C to 1,300°C is more likely to be a cubic shape, which is preferable. In this case, in view of dispersibility of glass, preferably, instead of forming glass powder directly into a sheet, the glass powder is calcined so as to be dispersed sufficiently, the calcined material is pulverized, and using the pulverized powder, the ceramic sheet is formed. When inorganic particles which form an oxide represented by general formula $ABO_3$ are used, preferably, raw materials are prepared such that the ratio of the A site to the B site, A/B, will be 1.0 to 1.1. When the A/B is in the range of 1.0 to 1.1, it is possible to increase the aspect ratio and the degree of orientation of crystals contained in the fired ceramic sheet. Furthermore, preferably, the A/B is in the range of 1.0 to 1.1 in view of compensation of an alkaline component or the like that volatilizes during firing. In the case where crystal grains are obtained from the resulting ceramic sheet, if the A/B is in the range of 1.0 to 1.1, there is a possibility that the alkali-rich phase present in grain boundaries is dissolved when the ceramic sheet is placed in water, and the crystal grains are separated into individual grain units easily, which is preferable. Furthermore, when the thickness of the shaped sheet is very small, for example, 3 $\mu$m or less, or when the atmosphere (vapor of the alkaline component, lead component, or the like) in the sheath during firing is thin, the change in the composition may increase due to volatilization of the alkaline component, lead component, or the like from the shaped sheet during firing. Therefore, the A/B in a range of 1.1 to 1.3 is also preferable.

In the preparation step of preparing inorganic particles, preferably, raw materials for the inorganic particles are pulverized and mixed, the mixed powder is calcined, and the resulting inorganic particles are further pulverized. As the raw materials for the inorganic particles, oxides, hydroxides, carbonates, sulfates, nitrates, tartrates, or the like of the desired components may be used. Preferably, oxides and carbonates are mainly used. In the pulverization of the inorganic particles, the particle diameter is preferably set according to the thickness of the sheet. The median diameter (D50) of the inorganic particles is preferably 2% or more, and more preferably 5% or more, of the thickness of the sheet. The median diameter (D50) of the inorganic particles is preferably 60% or less of the thickness of the sheet. If the median diameter is 2% or more of the thickness of the sheet, pulverization can be easily performed. If the median diameter is 5% or more of the thickness of the sheet, pulverization can be more easily performed. If the median diameter is 60% or less of the thickness of the sheet, the thickness of the sheet can be easily adjusted. The particle diameter is determined using a method in which inorganic particles are dispersed in a dispersion medium (organic solvent, water, or the like), and the particle diameter is measured using a laser diffraction/scattering particle size distribution analyzer. The pulverization of the inorganic particles is preferably conducted by wet pulverization. For example, a ball mill, a bead mill, a trommel, an attritor, or the like may be used.

(2) Sheet shaping step

The inorganic particles are formed into a self-supported planar shaped body with a sheet thickness of 10 $\mu$m or less. The sheet shaping can be conducted, for example, by a doctor-blade method using a slurry containing the inorganic particles, or extrusion molding using a puddle containing the inorganic particles. When the doctor-blade method is used, for example, a slurry is applied to a flexible plate (e.g., organic polymer plate, such as PET film), the applied slurry is solidified by drying to form a shaped body, and the shaped body is separated from the plate. Thereby, a shaped body of the ceramic sheet before firing may be obtained. When a slurry or a puddle is prepared before shaping, the inorganic particles may be dispersed in an appropriate dispersion medium, and a binder, a plasticizer, or the like may be appropriately added thereto. The slurry is preferably adjusted so as to have a viscosity of 500 to 700 cP and is preferably defoamed under reduced pressure. The thickness of the sheet is 10 $\mu$m or less, preferably 5 $\mu$m or less, and more preferably 2 $\mu$m or less. At 10 $\mu$m or less, a high degree of orientation can be obtained, and at 5 $\mu$m or less, a higher degree of orientation can be obtained. The thickness of the sheet is preferably 0.1 $\mu$m or more. If the thickness of the sheet is 0.1 $\mu$m or more, a self-supported planar sheet can be easily formed. Examples of other methods that may be used include high-speed spraying of particles, such as aerosol deposition; and a method in which a film is formed on a substrate made of a resin, glass, ceramic, metal, or the like by a vapor-phase method, such as sputtering, CVD, or PVD, and then the film is separated from the substrate to obtain a shaped body of the ceramic sheet before firing. In this case, since the density of the shaped body before firing can be increased, grain growth proceeds at low temperature, volatilization of constituent elements can be prevented, and the resulting ceramic sheet has high density, all of which are advantageous.

(3) Firing step of shaped body

The shaped body obtained in the shaping step is fired with or without an inactive layer which does not substantially react with the shaped body (e.g., fired ceramic plate, Pt plate, carbon plate, graphite plate, molybdenum plate, or tungsten plate) being disposed adjacent to the shaped body. For example, a method may be used in which green sheets and inactive layers are alternately stacked and then firing is performed, the inactive layers being composed of alumina, zirconia, spinel, carbon, graphite, molybdenum, tungsten, platinum, or the like which is inactive at the firing temperature of the shaped body. Alternatively, a method may be used in which a shaped sheet is stacked on an inactive sheet, the resulting laminate is formed into a roll, and then firing is performed. Alternatively, a method may be used in which a shaped body in the form of a sheet is formed on an inactive layer, and after firing, the sheet is separated from the inactive layer. Alternatively, a method may be used in which a sheet-like shaped body is formed on an inactive layer, and after firing, the inactive layer is removed. For example, when graphite is used for the inactive layer, a method may be used in which firing is performed under a non-oxidizing atmosphere (e.g., in nitrogen) to obtain a desired ceramic sheet in the presence of the inactive layer, then heat treatment is performed again under an oxidizing atmosphere (e.g. in air) at a temperature lower than that in the previous firing, and thereby graphite is removed by burning. Preferably, the shaped body is fired in a state in which volatilization of a specific component (e.g., alkaline component) contained in the shaped body is suppressed. By suppressing a specific component from being volatilized from the shaped body, it is possible to prevent the composition of the fired ceramic sheet from varying. For example, in order to suppress volatilization, the shaped body may be fired in a state in which other inorganic particles coexist with the inorganic particles constituting the shaped body. In such a manner, since a specific component is volatilized from the coexisting other inorganic particles, it is possible to relatively easily suppress the specific component from being volatilized from the shaped body. In this case, the "other inorganic particles" may be in the form of powder or a shaped body. Alternatively, in order to achieve the volatilization-suppressing state, the shaped body may be placed in a covered sheath or the like and fired in a sealed state. Preferably, the space in the sheath is decreased as much as possible. If the atmosphere in the sheath is excessively concentrated, for example, if the amount of the other inorganic particles allowed to coexist in the sheath is increased excessively, sintering of the shaped body and grain growth may be activated, resulting in occurrence of waviness in the sheet, or grain growth may proceed so as to decrease the surface area of the grain, namely, the thickness may increase, resulting in a decrease in the aspect ratio. Therefore, it is important to empirically set the inner volume of the sheath, the amount of the shaped body, the amount of the inorganic particles allowed to coexist, and the like to be appropriate so that the atmosphere in the sheath is in a optimum state. When firing is performed in the presence of the other inorganic particles, preferably, the coexisting inorganic particles have the same composition as those of the shaped body. It may also be possible to allow particles in which a specific component is more easily volatilized than the inorganic particles constituting the shaped body to coexist so that the specific component can be supplemented to the ceramic sheet. Furthermore, it is more important to provide an optimum atmosphere at an optimum timing in the firing step. For example, a method may be used in which firing is performed at a first firing temperature in a sheath controlled to be a first atmosphere, the temperature is decreased to room temperature, and then firing is performed at a second firing temperature higher than the first firing temperature in a sheath controlled to be a second atmosphere. The firing atmosphere may be air. Alternatively, in view of suppression of volatilization of the constituent elements, reactivity with the inactive layer, and the like, the atmosphere may be an oxygen atmosphere; a neutral atmosphere, such as nitrogen; a reducing atmosphere in the presence of hydrogen or a hydrocarbon; or a vacuum. Furthermore, from the standpoint of accelerating in-plane grain growth, firing under pressure, such as hot pressing, may be performed.

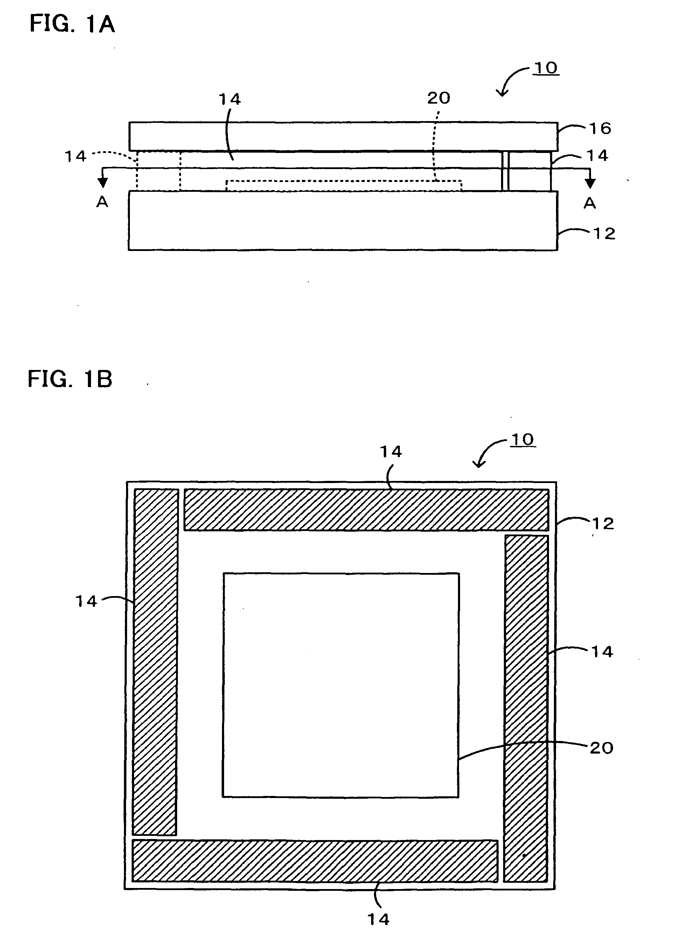

The firing step will be described with reference to the drawings. Fig. 1A is a side view which schematically shows a firing apparatus 10, and Fig. 1B is a cross-sectional view taken along the line A-A of Fig. 1A. The firing apparatus 10 is used when a shaped sheet 20 is fired in a firing furnace which is not shown. The firing apparatus 10 includes a setter 12 on which a green shaped sheet 20 is placed and which is a fired ceramic plate, coexisting green shaped sheets 14 which are composed of the same inorganic particles as those of the shaped sheet 20 and have thickness larger than that of the shaped sheet 20, and a quadrangular plate 16 which is placed on the coexisting green shaped sheets 14 and which is a fired ceramic plate serving as a cover for the shaped sheet 20. As shown in Fig. 1B, by surrounding four sides of the shaped sheet 20 with the coexisting green shaped sheets 14, it is possible to prevent volatilization of a specific component (e.g., alkaline component) from the shaped sheet 20 and a change in the composition. In this example, the setter 12 is planar. It is also possible to use a setter in which the contact area with the shaped sheet 20 is decreased so as to prevent adhesion between the setter and the shaped sheet 20. Examples of such a setter include a setter in which the sheet-placing surface is roughened, a honeycomb-shaped setter in which a plurality of through-holes are formed in the sheet-placing surface, and a dimpled setter. Furthermore, a method may be used in which alumina powder or zirconia powder that is stable at the firing temperature of the shaped sheet 20 is spread over the sheet-placing surface of the setter 12, the shaped sheet 20 is placed thereon, and then firing is performed. When inorganic particles in the form of powder are allowed to coexist inside the sheath instead of allowing a green shaped sheet to coexist, by adjusting the manner of placing the setter, the size of the setter, the stacking method, the position of placement of the powder inside the sheath, and the like, it is possible to homogeneously control the atmosphere in the sheath. Thus, when a plurality of sheets are fired, the individual sheets can have a homogeneous crystal grain structure.

With respect to the firing conditions, preferably, the shaped sheet 20 is fired at a temperature that is higher, by 10 percent or more, than the firing temperature at which equilibrium-shaped crystals are obtained by firing, for example, at the firing temperature at which densification and grain growth are caused by firing a bulk. At the temperature higher by 10 percent or more, grain growth of the shaped sheet 20 with a thickness of 10 $\mu$m or less can be promoted sufficiently. Preferably, firing is performed at a high temperature to such an extent that the material of the shaped body is not decomposed. In particular, when the thickness of the sheet is decreased, grain growth does not easily proceed, and therefore, it is preferable to increase the firing temperature. For example, in the firing step of inorganic particles composed of $NaNbO_3$ in which Li, K, or the like is added to the A site and Ta is added to the B site ($(Li_XNa_YK_Z)Nb_MTa_NO_3$), the firing temperature is preferably set at 900°C to 1,250°C. At a firing temperature of 900°C or higher, crystal growth of the particles is promoted, which is preferable. At a temperature of 1,250°C or less, volatilization of an alkaline component or the like can be reduced, and decomposition of the material can be suppressed. By firing in such a manner, the inorganic particles contained in the shaped sheet 20 grow into crystal grains in which the length in the surface direction of the sheet is larger than the length in the thickness direction, and the degree of orientation is 30% or more.

The resulting ceramic sheet may be crushed to form powder of crystal grains such that the aspect ratio is not 2 or less, preferably not 3 or less and used as a raw material for a crystallographically-oriented ceramic. The crystallographically-oriented ceramic can be formed into any shape, for example, with a size in the thickness direction exceeding 10 $\mu$m. That is, the ceramic sheet may be formed in order to obtain crystal grains used in a production process of producing a crystallographically-oriented ceramic. An example of a method for producing a crystallographically-oriented ceramic will be described below. A crystallographically-oriented ceramic may be produced by a method including a mixing step of mixing powder containing the crystal grains obtained from the ceramic sheet, other raw material powder (e.g., non-oriented inorganic particles), and as necessary, a binder, a plasticizer, or the like; and a second shaping step of forming the mixture into a secondary shaped body having a predetermined shape by orientation-shaping (secondary orientation) in which crystal grains are oriented in a predetermined direction. In the powder containing the crystal grains, the individual crystal grains may be separated or some crystal grains may be connected to each other. The orientation-shaping can be performed by the doctor-blade method, extrusion molding, or the like described above. Then, a second firing step is carried out in which the secondary shaped body is fired such that the other raw material powder is oriented in the direction in which the powder of crystal grains is oriented. Thereby, a crystallographically-oriented ceramic is obtained. The firing temperature in the second firing step may be equal to or higher, by 10 percent or more, than the firing temperature at which equilibrium-shaped crystals are obtained under predetermined firing conditions described above. Even when the shaped sheet 20 is fired not in a volatilization-suppressing state, the intended compositional ratio of the crystallographically-oriented ceramic can be achieved by adding the volatilized component in the mixing step or the second shaping step. Furthermore, although a higher degree of orientation of the ceramic sheet is more preferable, since the degree of orientation can be increased by firing after the second orientation, a degree of orientation of 30% or more is sufficient.

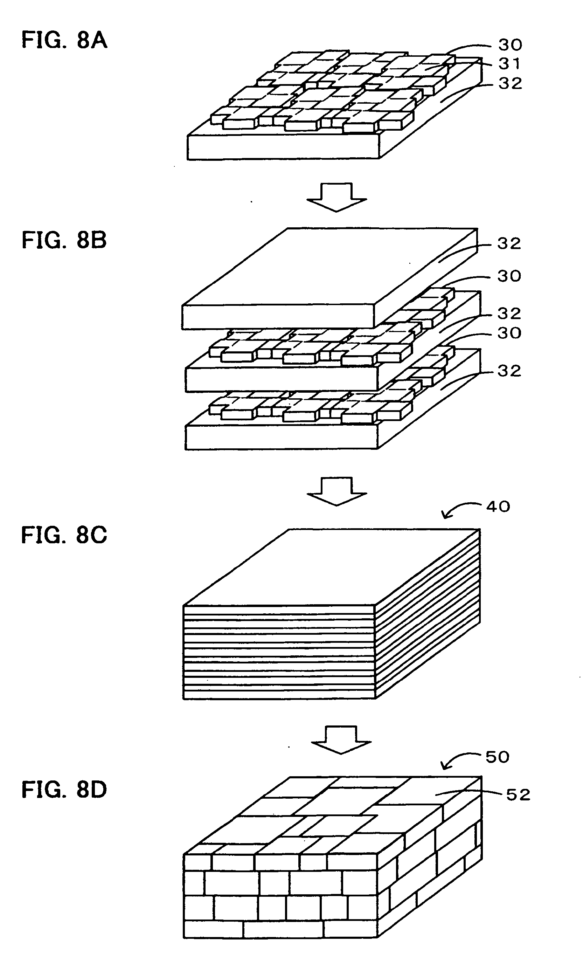

Alternatively, a crystallographically-oriented ceramic may be produced using the ceramic sheet without crushing. For example, a crystallographically-oriented ceramic may be produced by a method including a stacking step of stacking the ceramic sheet and a raw material powder sheet containing raw material powder to form a secondary shaped body, and a second firing step of firing the secondary shaped body such that the raw material powder is oriented in the direction in which the crystal grains contained in the ceramic sheet is oriented. Figs. 8A to 8D are views schematically showing a process for producing a crystallographically-oriented ceramic by stacking ceramic sheets. Specifically, the other raw material powder (e.g., non-oriented inorganic particles or the like) and as necessary, a binder, a plasticizer, or the like are mixed to prepare a raw material paste containing the raw material powder, and the raw material paste is formed into a raw material powder sheet 32 with a predetermined thickness, for example, 10 to 20 $\mu$m, by screen printing, a doctor-blade method, or the like. A ceramic sheet 30 containing crystal grains 31 grown in the surface direction is stacked on the raw material powder sheet 32 (refer to Fig. 8A), and the resulting laminate is dried appropriately at a drying temperature of 80°C to 150°C. By repeating the stacking step in which ceramic sheets 30 and raw material powder sheets 32 are alternately stacked until the required thickness of the crystallographically-oriented ceramic is achieved (refer to Fig. 8B), a secondary shaped body 40 (laminate) is obtained (refer to Fig. 8C). Subsequently, the secondary shaped body 40 is fired at a predetermined firing temperature so as to cause grain growth of the raw material contained in the raw material powder sheet 32 in the direction in which the crystal grains 31 are oriented (refer to Fig. 8D). Before the firing, degreasing may be performed by calcination at a predetermined calcining temperature (e.g., 600°C). In the second firing step, preferably, the secondary shaped body 40 is fired by firing under pressure, such as hot pressing, in order to further accelerate grain growth and densification. In such a manner, as in the method described above, it is possible to orient the other raw material powder in the direction in which the crystal grains are oriented using the ceramic sheets, and thus a crystallographically-oriented ceramic can be easily produced.

In the self-supported planar ceramic sheets according to the embodiment described above, the thickness of the sheet is 10 $\mu$m or less, the number of crystal grains present in the thickness direction of the sheet at any one point is one, the surface of the sheet including a specific crystal plane (pseudocubic (100) plane), and the degree of orientation of the sheet measured by the Lotgering method is 30% or more. Consequently, higher piezoelectric/electrostrictive properties can be obtained. Furthermore, in the methods for producing ceramic sheets, only by forming a shaped body with a thickness of 10 $\mu$m or less and firing the shaped body, it is possible to obtain crystal grains having a high degree of orientation without using an additive for increasing the degree of orientation or without substituting the composition after firing. Consequently, it is possible to obtain ceramic sheets having a homogeneous composition by simpler processing.

It is to be understood that the present invention is not limited to the embodiment described above.

For example, in the embodiment described above, the ceramic sheet is crushed and used as a raw material for a crystallographically-oriented ceramic. The ceramic sheet may be used in other applications. For example, ceramic sheets of the present invention can be used for polycrystalline materials composed of a substance, the function or properties of which have crystallographic orientation dependence, such as dielectric materials, pyroelectric materials, piezoelectric materials, ferroelectric materials, magnetic materials, ion-conducting materials, electron-conducting materials, heat-conducting materials, thermoelectric materials, superconducting materials, and abrasion-resistant materials. Specifically, high-performance elements can be obtained by applying the ceramic sheets in various sensors, such as acceleration sensors, pyroelectric sensors, ultrasonic sensors, electric field sensors, temperature sensors, gas sensors, knocking sensors, yaw rate sensors, air bag sensors, and piezoelectric gyro sensors; energy transducers, such as piezoelectric transformers; low-loss actuators or low-loss resonators, such as piezoelectric actuators, ultrasonic motors, and resonators; and other elements, such as capacitors, bimorph piezoelectric elements, vibration pickups, piezoelectric microphones, piezoelectric ignition elements, sonars, piezoelectric buzzers, piezoelectric speakers, oscillators, filters, dielectric elements, microwave dielectric elements, thermoelectric conversion elements, pyroelectric elements, magnetoresistive elements, magnetic elements, superconducting elements, resistance elements, electron-conducting elements, ion-conducting elements, PTC elements, and NTC elements. In such cases, the aspect ratio of crystal grains is appropriately set depending on the application.

EXAMPLES

Experimental examples in which ceramic sheets are specifically produced will be described below. Examples 3, 4, 6 to 9 and 11 to 14 are examples of the invention.

[Experimental Example 1]

(Synthesis step of synthesizing inorganic particles)

Powders ($Li_2CO_3$, $Na_2CO_3$, $K_2CO_3$, $Nb_2O_5$, and $Ta_2O_5$) were weighed so as to satisfy the composition $Li_{0.07}$

$(Na_{0.5}K_{0.5})_{0.93}Nb_{0.9}Ta_{0.1}O_3$. The weighed powders, zirconia balls, and ethanol as a dispersion medium were placed in a plastic pot, and wet mixing and pulverization were performed using a ball mill for 16 hours. The resulting slurry was dried using an evaporator and a dryer, and then calcination was performed at 850°C for 5 hours. The calcined powder, zirconia balls, and ethanol as a dispersion medium were subjected to wet pulverization using a ball mill for 5 hours, followed by drying using an evaporator and a dryer. Thereby, powder of inorganic particles composed of $Li_{0.07}(Na_{0.5}K_{0.5})_{0.93}Nb_{0.9}Ta_{0.1}O_3$ was obtained. The average particle diameter of the resulting powder was measured with a laser diffraction/scattering particle size distribution analyzer LA-750 manufactured by HORIBA, Ltd. using water as a dispersion medium. As a result, the median diameter (D50) was 0.6 $\mu$m.

(Shaping step of forming self-supported sheet)

The powder of inorganic particles, polyvinyl butyral (BM-2, manufactured by Sekisui Chemical Co., Ltd.) as a binder, a plasticizer (DOP, manufactured by Kurogane Kasei Co., Ltd.), and a dispersant (SP-030, manufactured by Kao Corporation) were mixed into a dispersion medium obtained by mixing equal amounts of toluene and isopropanol to prepare a shaping material in the form of a slurry. The amounts of the individual materials used were 100 parts by weight of the dispersion medium, 10 parts by weight of the binder, 4 parts by weight of the plasticizer, and 2 parts by weight of the dispersant on the basis of 100 parts by weight of inorganic particles. The resulting slurry was defoamed by stirring under reduced pressure so that the viscosity was adjusted to 0.5 to 0.7 Pa.s (500 to 700 cP). The viscosity of the slurry was measured using an LVT viscometer manufactured by Brookfield. The resulting slurry was formed into a sheet on a PET film by a doctor-blade method. The thickness after drying was set at 10 $\mu$m.

(Firing step of self-supported sheet)

The shaped sheet peeled off from the PET film was cut into a 50-mm square with a cutter and placed in the center of a setter made of zirconia (size: 70 mm square, height: 5 mm). Green shaped sheets (size: 5 mm x 40 mm, thickness: 100 $\mu$m) composed of the same raw materials as those for the shaped sheet were placed on the setter outside the four sides of the shaped sheet so as surround the shaped sheet, and a quadrangular plate made of zirconia (size: 70 mm square, height: 5 mm) was further placed thereon. In such a manner, the space around the shaped sheet was minimized, and the same raw materials as those for the shaped sheet were allowed to coexist for firing. Subsequently, degreasing was performed at 600°C for 2 hours, and then firing was performed at 1,000°C for 5 hours. After firing, a portion not adhering to the setter was retrieved and used as a ceramic sheet of Experimental Example 1.

[Experimental Examples 2 and 3]

A ceramic sheet of Experimental Example 2 and a ceramic sheet of Experimental Example 3 were formed as in Experimental Example 1 except that the firing temperature in the firing step was set at 1,050°C and 1,100°C, respectively.

[Experimental Examples 4 and 5]

A ceramic sheet of Experimental Example 4 and a ceramic sheet of Experimental Example 5 were formed as in Experimental Example 1 except that the thickness of the shaped sheet was set at 5 $\mu$m and 15 $\mu$m, respectively, and the firing temperature was set at 1,100°C.

[Experimental Examples 6 to 10]

In the synthesis step, powders of inorganic particles were prepared such that the compositions of the inorganic particles were $Li_{0.07}(Na_{0.5}K_{0.5})_{0.93}NbO_3$, $Li_{0.07}(Na_{0.5}K_{0.5})_{0.97}NbO_{3.02}$, $Li_{0.07}(Na_{0.5}K_{0.5})_{1.03}NbO_{3.05}$, $Li_{0.1}(Na_{0.5}K_{0.5})_{1.1}NbO_{3.1}$, and $Li_{0.07}(Na_{0.5}K_{0.5})_{0.91}NbO_{2.99}$. That is, powders of inorganic particles were prepared such that, in general formula $ABO_3$, the A/B was 1.00, 1.04, 1.10, 1.20, and 0.98. Other than the above, the process was conducted in the same manner as in Experimental Example 4 . As a result, ceramic sheets of Experimental Examples 6 to 10 were obtained.

[Experimental Example 11]

Powders ($Bi_2O_3$, $Na_2CO_3$, $K_2CO_3$, $Ag_2O$, and $TiO_2$) were weighed so as to satisfy the composition $(Bi_{0.5}Na_{0.35}K_{0.1}Ag_{0.05})TiO_3$, and wet mixing, pulverization, and drying were performed as in Experimental Example 1. Then, calcination was performed at 900°C for 2 hours. The calcined powder was pulverized and dried as in Experimental Example 1. Thereby, powder of inorganic particles composed of $(Bi_{0.5}Na_{0.35}K_{0.1}Ag_{0.05})TiO_3$ was obtained. The resulting powder was formed into a ceramic sheet of Experimental Example 11 as in Experimental Example 1 except that, in the shaping step, the thickness of the sheet was set at 5 $\mu$m, and in the firing step, degreasing was performed at 600°C for 2 hours and the firing temperature was set at 1,250°C for 3 hours.

[Experimental Example 12]

A $ZnO$-$B_2O_3$-$SiO_2$-based glass powder (ASF1891 manufactured by Asahi Glass (AGG)) (1% by weight) was added to a synthesized powder having the composition $0.2Pb(Mg_{0.33}Nb_{0.67})O_3$-$0.35PbTiO_3$-$0.45PbZrO_3$ to which 1% by weight of NiO was added. The weighed mixture, zirconia balls, and ion-exchanged water as a dispersion medium were placed in a plastic pot, and wet mixing was performed using a ball mill for 16 hours. The resulting slurry was dried using a dryer, and then calcination was performed at 800°C for 2 hours. The calcined powder, zirconia balls, and ion-exchanged water as a dispersion medium were subjected to wet pulverization using a ball mill, followed by drying using a dryer. Thereby, powder of inorganic particles was obtained. The powder was formed into a sheet with a thickness of 1 $\mu$m in the shaping step. The resulting sheet was placed on a quadrangular zirconia plate disposed in an alumina sheath. As powder for controlling the firing atmosphere, a small amount of powder of inorganic particles composed of $0.2Pb(Mg_{0.33}Nb_{0.67})O_3$-$0.35PbTiO_3$-$0.45PbZrO_3$ was allowed to coexist in the sheath. The same process was carried out as in Experimental Example 1 except that degreasing was performed at 600°C for 2 hours and firing was performed at 1,100°C for 5 hours in the firing step. Thereby, a ceramic sheet of Experimental Example 12 was obtained.

[Experimental Example 13]

A ceramic sheet of Experimental Example 13 was formed as in Experimental Example 12 except that powder of inorganic particles with the composition $0.2Pb(Mg_{0.3}3Nb_{0.67})O_3$-$0.35PbTiO_3$-$0.45PbZrO_3$ was used, NiO and glass powder were not added, and shaping was performed with a sheet thickness of 2 $\mu$m.

[Experimental Example 14]

A ceramic sheet of Experimental Example 14 was formed as in Experimental Example 12 except that the A/B was 1.1 in $0.2Pb(Mg_{0.33}Nb_{0.67})O_3$-$0.35PbTiO_3$-$0.45PbZrO_3$.

[Electron microscopy]

With respect to the ceramic sheets of Experimental Examples 1 to 14, SEM photographs were taken using a scanning electron microscope (JSM-6390 manufactured by JEOL Ltd.). The thickness of each ceramic sheet was determined from the SEM photographs. The sheet surface of the ceramic sheet was observed, and in a field of view which included about 20 to 40 crystal grains, an area S per grain was calculated using the formula {(area of the field of view) /(number of grains)}. Assuming that each grain had a circular shape, a grain diameter was calculated using the equation (1) described above. The value obtained by dividing the grain diameter by the thickness of the sheet was defined as the aspect ratio.

[Orientation]

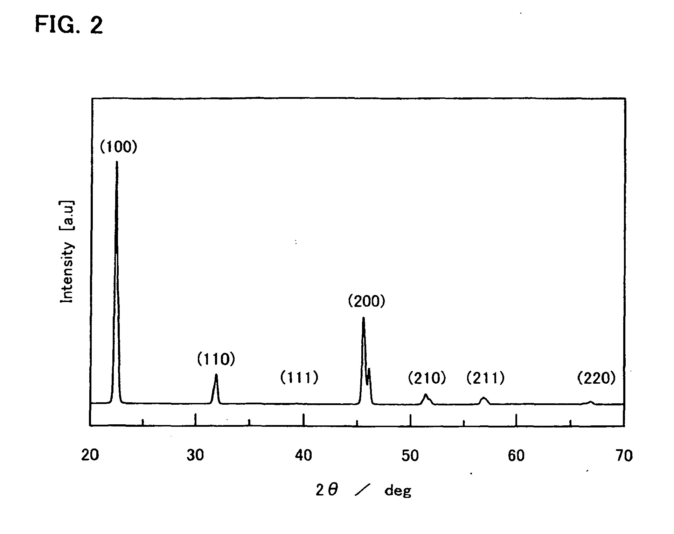

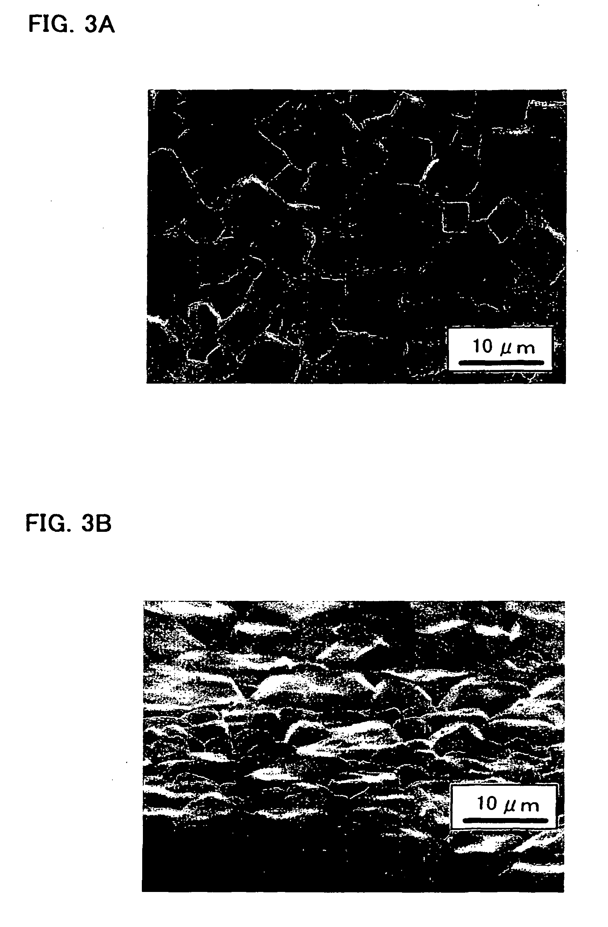

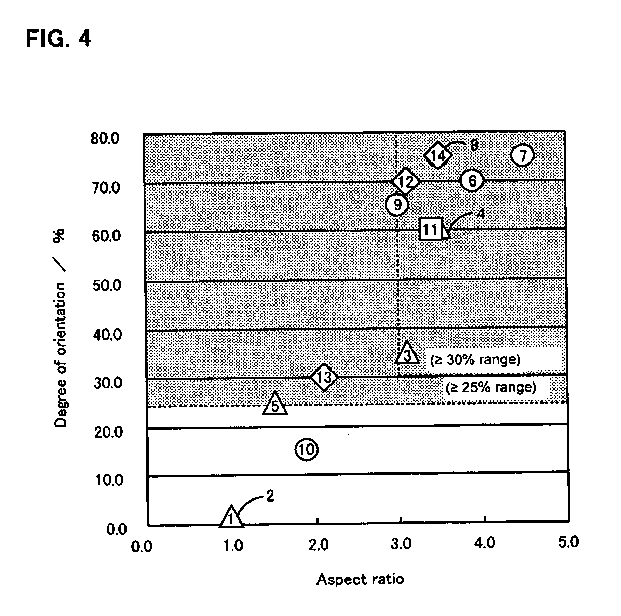

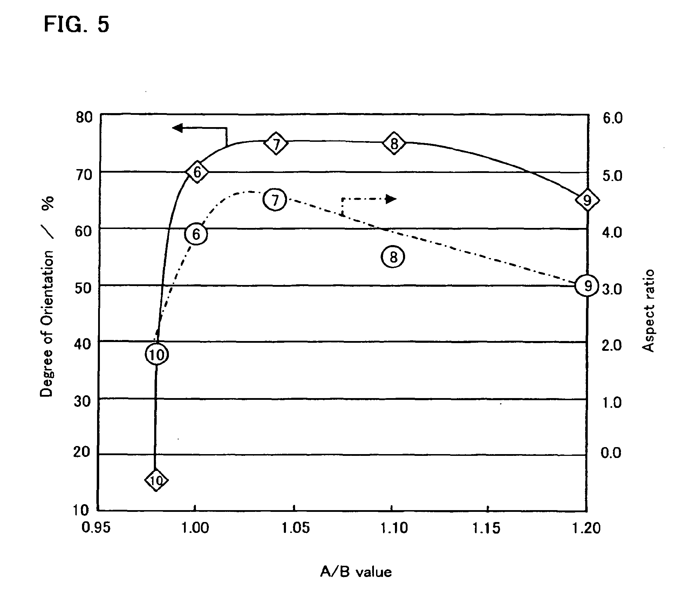

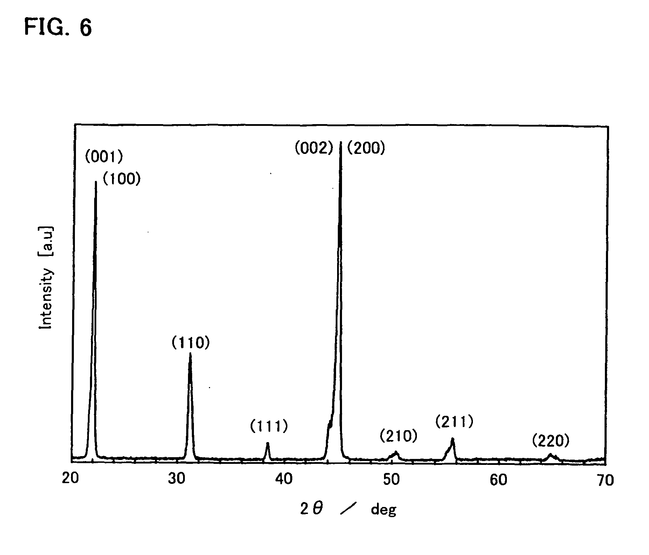

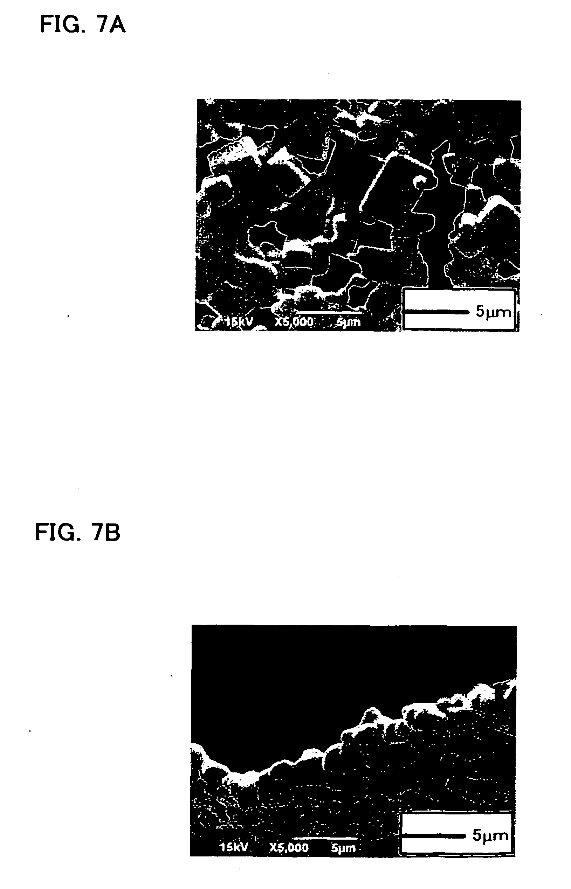

With respect to each of the ceramic sheets of Experimental Examples 1 to 14, an XRD pattern was measured when the surface of the sheet was irradiated with X-ray using an XRD diffraction device (RAD-IB manufactured by Rigaku Corporation). The degree of orientation of the pseudocubic (100) plane was measured by the Lotgering method in which the degree of orientation was calculated according to the equation (2) described above using peaks of pseudocubic (100), (110), and (111) planes.
The evaluation results of Experimental Examples 1 to 14 are shown in Table 1 and Figs. 2 to 7B. Table 1 shows the name of sample, inorganic particles, average particle diameter in terms of median diameter (D50), firing temperature, thickness of the sheet, aspect ratio, and degree of orientation. Fig. 2 shows an X-ray diffraction pattern in Experimental Example 4; Figs. 3A and 3B are SEM photographs in Experimental Example 4; Fig. 4 is a graph showing the relationship between the aspect ratio of crystals included in each ceramic sheet and the degree of orientation measured by the Lotgering method; and Fig. 5 is a graph showing the relationship between each of the degree of orientation and the aspect ratio and the A/B value. In Fig. 4, Experimental Examples 1 to 5 in which the firing temperature or the thickness was varied are denoted by triangles, Experimental Examples 6 to 10 in which the composition was varied are denoted by circles, Experimental Example 11 is denoted by a square, and Experimental Examples 12 to 14 are denoted by diamonds. In each of Figs. 4 and 5, the individual experimental examples are denoted by the corresponding numbers, the range of the ceramic sheet with a degree of orientation of 25% or more is hatched, and the range with an aspect ratio of 3 or more and a degree of orientation of 30% or more is indicated by dotted lines. Furthermore, Fig. 6 shows an X-ray diffraction pattern in Experimental Example 12, and Figs. 7A and 7B are SEM photographs in Experimental Example 12. As shown in Figs. 3A, 3B, 7A and 7B, in the ceramic sheets of the present invention, crystals were grown in the direction of the surface of the sheet and grain growth proceeded such that the number of crystal grains present in the thickness direction of the sheet at any one point was substantially one. In the ceramic sheets, the percentage of the portion which included only one crystal grain in the thickness direction at any point was 90% or more in terms of area ratio. As shown in Figs. 3A, 3B, 7A and 7B, in the ceramic sheets, aggregation in which crystal grains overlap with each other is hardly present, and the crystal grains can be relatively easily separated by crushing at grain boundaries where crystal grains are joined together. As is evident form Figs. 4 and 5, in the case of sodium potassium niobate, according to Experimental Examples 1 to 3, the degree of orientation of 25% or more can be achieved by setting the firing temperature at 1,100°C or higher. According to Experimental Examples 1 to 14, the degree of orientation of 30% or more can be achieved by setting the thickness of the sheet at 10 $\mu$m or less. According to Experimental Examples 6 to 10, 12, and 14, the degree of orientation can be achieved by setting the A/B in the range of 1.0 to 1.2.

TABLE 1

| Sample | Inorganic particles | Average particle diameter (μm) | Firing temperature (°C) | Thickness of sheet (μm) | Aspect ratio | Degree of orientation[1] (%) |
|---|---|---|---|---|---|---|
| Example 1 | Sodium potassium niobate[2] | 0.6 | 1000 | 10 | 1.0[12] | 0 |
| Example 2 | Sodium potassium niobate | 0.6 | 1050 | 10 | 1.0[12] | 0 |
| Example 3 | Sodium potassium niobate | 0.6 | 1100 | 10 | 3.1 | 35 |
| Example 4 | Sodium potassium niobate | 0.6 | 1100 | 5 | 3.5 | 60 |
| Example 5 | Sodium potassium niobate | 0.6 | 1100 | 15 | 1.5 | 25 |
| Example 6 | Sodium potassium niobate[3] | 0.6 | 1100 | 5 | 3.9 | 70 |
| Example 7 | Sodium potassium niobate[4] | 0.6 | 1100 | 5 | 4.5 | 75 |
| Example 8 | Sodium potassium niobate[5] | 0.6 | 1100 | 5 | 3.5 | 75 |
| Example 9 | Sodium potassium niobate[6] | 0.6 | 1100 | 5 | 3.0 | 65 |
| Example 10 | Sodium potassium niobate[7] | 0.6 | 1100 | 5 | 1.8 | 15 |
| Example 11 | Bismuth sodium titanate[8] | 0.6 | 1250 | 5 | 3.4 | 60 |

(continued)

| Sample | Inorganic particles | Average particle diameter ($\mu$m) | Firing temperature (°C) | Thickness of sheet ($\mu$m) | Aspect ratio | Degree of orientation[1] (%) |
|---|---|---|---|---|---|---|
| Example 12 | Lead composite oxide[9] | 0.6 | 1100 | 1 | 3.1 | 70 |
| Example 13 | Lead composite oxide[10] | 0.6 | 1100 | 2 | 2.1 | 30 |
| Example 14 | Lead composite oxide[11] | 0.6 | 1100 | 1 | 3.5 | 75 |

1) Degree of orientation in (100) plane measured by Lotgering method
2) $Li_{0.07}(Na_{0.5}K_{0.5})_{0.93}Nb_{0.9}Ta_{0.1}O_3$
3) $Li_{0.07}(Na_{0.5}K_{0.5})_{0.93}NbO_3:ABO_3$, A/B=1.00
4) $Li_{0.07}(Na_{0.5}K_{0.5})_{0.97}NbO_{3.02}:ABO_3$, A/B=1.04
5) $Li_{0.07}(Na_{0.5}K_{0.5})_{1.03}NbO_{3.05}:ABO_3$, A/B=1.10
6) $Li_{0.1}(Na_{0.5}K_{0.5})_{1.1}NbO_{3.1}:ABO_3$, A/B=1.20
7) $Li_{0.07}(Na_{0.5}K_{0.5})_{0.91}NbO_{2.99}:ABO_3$, A/B=0.98
8) $(Bi_{0.5}Na_{0.35}K_{0.1}Ag_{0.05})TiO_3$
9) $0.2Pb(Mg_{0.33}Nb_{0.67})O_3-0.35PbTiO_3-0.45PbZrO_3+NiO+ZnO-B_2O_3-SiO_2$
10) $0.2Pb(Mg_{0.33}Nb_{0.67})O_3-0.35PbTiO_3-0.45PbZrO_3$
11) $0.2Pb(Mg_{0.33}Nb_{0.67})O_3-0.35PbTiO_3-0.45PbZrO_3$ of Example 12, A/B=1. 1
12) Grains did not grow to an extent that one grain is present in the thickness direction of the sheet

[Production of crystallographically-oriented ceramic]

The powder of inorganic particles after calcination in Experimental Example 4, a crushed material (powder containing the crystal grains) obtained by crushing the ceramic sheet of Experimental Example 4 such that the aspect ratio was 3 or more, polyvinyl butyral (BM-2, manufactured by Sekisui Chemical Co., Ltd.) as a binder, a plasticizer (DOP, manufactured by Kurogane Kasei Co., Ltd.), and a dispersant (SP-030, manufactured by Kao Corporation) were mixed into a dispersion medium obtained by mixing equal amounts of toluene and isopropanol to prepare a shaping material in the form of a slurry such that the composition of the resulting fired crystallographically-oriented ceramic was $Li_{0.03}Na_{0.475}K_{0.475}Nb_{0.82}Ta_{0.18}O_3$. The amounts of the individual materials used were 30 parts by weight of the crushed material containing crystal grains, 100 parts by weight of the dispersion medium, 10 parts by weight of the binder, 4 parts by weight of the plasticizer, and 2 parts by weight of the dispersant on the basis of 100 parts by weight of the inorganic particles. The resulting slurry was defoamed by stirring under reduced pressure so that the viscosity was adjusted to 2.5 to 3 Pa.s (2,500 to 3,000 cP). The viscosity of the slurry was measured using an LVT viscometer manufactured by Brookfield. The resulting slurry was formed into a planar shape by a doctor-blade method such that crystal grains were oriented in one direction and the thickness after drying was 100 $\mu$m. The resulting plate was dried at room temperature. Subsequently, degreasing was performed at 600°C for 2 hours, and then firing was performed at 1,100°C for 5 hours so that the grain growth of the inorganic particles proceeded. Thereby, a crystallographically-oriented ceramic was obtained.

Furthermore, a crystallographically-oriented ceramic was produced without crushing the ceramic sheet. First, the powder of inorganic particles after calcination in Experimental Example 6, polyvinyl butyral (BM-2, manufactured by Sekisui Chemical Co., Ltd.) as a binder, and a plasticizer (DOP, manufactured by Kurogane Kasei Co., Ltd.) were mixed into terpineol as a dispersion medium to prepare a shaping material in the form of a paste such that the composition of the resulting fired crystallographically-oriented ceramic was $Li_{0.03}Na_{0.475}K_{0.475}Nb_{0.82}Ta_{0.18}O_3$. The amounts of the individual materials used were 25 parts by weight of the dispersion medium, 3 parts by weight of the binder, and 1 part by weight of the plasticizer on the basis of 100 parts by weight of the inorganic particles. The resulting paste was formed into a raw material powder sheet with a thickness of 15 $\mu$m by screen printing. Before drying, a ceramic sheet of Experimental Example 4 was placed on the shaped raw material powder sheet, and the drying was performed for 3 minutes using a dryer at 150°C. This step was repeated 100 times, and a secondary shaped body (laminate) with a thickness of about 2 mm was obtained. The secondary shaped body was calcined at 600°C for 3 hours and degreased.

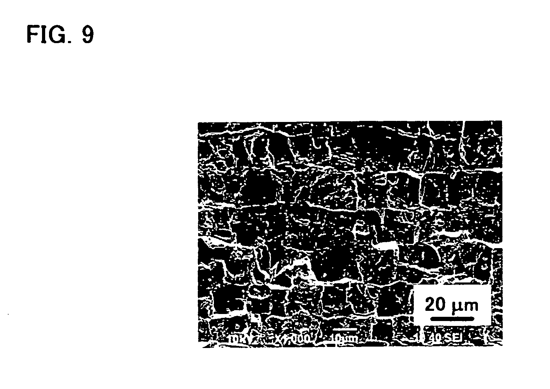

Then, atmospheric hot pressing was performed at a firing temperature of 1,050°C, with a pressure of 30 MPa, and for a retention time of 3 hours. Thereby, a crystallographically-oriented ceramic was obtained. Fig. 9 is a SEM photograph showing a crystallographically-oriented ceramic produced from the laminate. In the crystallographically-oriented ceramic thus produced, the compactness was 98% and the degree of orientation was 90%. As described above, it was possible to produce a crystallographically-oriented ceramic with a high degree of orientation by a very simple method of using a ceramic sheet formed with a thickness of 10μm or less.

Industrial Applicability

The present invention can be applied to crystallographically-oriented ceramics, for example, in the field of producing piezoelectric/electrostrictive materials.

**Claims**

1. A ceramic sheet which is self-supported and planar and has a thickness of 10 μm or less, wherein in the ceramic sheet in terms of area ratio the percentage of the portion which includes only one crystal grain in the thickness direction is 70% or more, and wherein, in the crystal grains, the crystal grain length in a direction parallel to the surface of the sheet is larger than the crystal grain length in the thickness direction, and a specific crystal plane of the crystal grains is orientated in the surface of the ceramic sheet, the degree of orientation of the specific crystal plane measured by the Lotgering method being 30% or more.

2. The ceramic sheet according to claim 1, wherein the thickness of the sheet is 0.1 to 5 μm.

3. The ceramic sheet according to claim 1 or 2, wherein the crystal grains include an oxide represented by general formula $ABO_3$ as a main component, where the A site contains at least one element selected from Li, Na, K, Bi and Ag, and the B site contains at least one element selected from Nb, Ta and Ti.

4. The ceramic sheet according to claim 1 or 2, wherein the crystal grains include an oxide represented by general formula $ABO_3$ as a main component, where the A site contains Pb, and the B site contains at least one element selected from Mg, Zn, Nb, Ni, Ti and Zr.

5. The ceramic sheet according to Claim 3 or 4, wherein, in the crystal grains before firing, the ratio A/B is 1.0 to 1.3, where the ratio of A/B is the ratio of the number of atoms at the respective A and B sites of the oxide $ABO_3$.

6. The ceramic sheet according to any one of Claims 1 to 5, wherein the crystal grains are composed of inorganic particles that grow into crystal grains with an isotropic and polyhedral shape.

7. The ceramic sheet according to any one of Claims 1 to 5, wherein the crystal grains are composed of inorganic particles that grow into crystal grains with an anisotropic shape.

8. The ceramic sheet according to any one of Claims 1 to 7, wherein the crystal grains are composed of an oxide having a perovskite structure.

9. A method for producing a crystallographically-oriented ceramic in which crystals are oriented comprising:

   a mixing step of mixing powder including the crystal grains obtained by crushing the ceramic sheet according to any one of Claims 1 to 8 and raw material powder;
   a molding step of forming the mixed powder into a molded body in which the powder including the crystal grains is oriented in a predetermined direction; and
   a firing step of firing the molded body so that the raw material powder is oriented in the predetermined direction in which the powder including the crystal grains is oriented.

10. A method for producing a crystallographically-oriented ceramic in which crystals are oriented comprising:

   a stacking step of stacking the ceramic sheet according to any one of Claims 1 to 8 and a raw material powder sheet containing raw material powder to form a molded body; and
   a firing step of firing the molded body so that the raw material powder is oriented in the direction in which the crystal grains contained in the ceramic sheet are oriented.

11. The method for producing the crystallographically-oriented ceramic according to Claim 10, wherein, in the firing step, the molded body is fired under pressure so that the raw material powder is oriented in the direction in which the crystal grains contained in the ceramic sheet are oriented.

**Patentansprüche**

1. Keramikplatte, die selbsttragend und planar ist und eine Dicke von 10 $\mu$m oder weniger aufweist, worin in der Keramikplatte im Sinne des Flächenverhältnisses der Prozentsatz des Teiles, der nur ein Kristallkorn in der Dickerichtung umfasst, 70 % oder mehr beträgt und worin in den Kristallkörnern die Kristallkornlänge in paralleler Richtung zur Oberfläche der Platte größer ist als die Kristallkornlänge in der Dickerichtung und eine spezifische Kristallebene der Kristallkörner in der Oberfläche der Keramikplatte ausgerichtet ist, wobei der Grad der Ausrichtung der spezifischen Kristallebene, gemessen nach der Lotgering-Methode, 30 % oder mehr beträgt.

2. Keramikplatte nach Anspruch 1, worin die Dicke der Platte 0,1 bis 5 $\mu$m beträgt.

3. Keramikplatte nach Anspruch 1 oder 2, worin die Kristallkörner ein durch die allgemeine Formel $ABO_3$ dargestelltes Oxid als Hauptkomponente umfassen, wobei die A-Stelle zumindest ein aus Li, Na, K, Bi und Ag ausgewähltes Element enthält und die B-Stelle zumindest ein aus Nb, Ta und Ti ausgewähltes Element enthält.

4. Keramikplatte nach Anspruch 1 oder 2, worin die Kristallkörner ein durch die allgemeine Formel $ABO_3$ dargestelltes Oxid als Hauptkomponente umfassen, wobei die A-Stelle Pb enthält und die B-Stelle zumindest ein aus Mg, Zn, Nb, Ni, Ti und Zr ausgewähltes Element enthält.

5. Keramikplatte nach Anspruch 3 oder 4, worin in den Kristallkörnern vor dem Brennen das Verhältnis A:B 1,0 bis 1,3 beträgt, wobei das Verhältnis A:B das Verhältnis der Anzahl an Atomen an der jeweiligen A- bzw. B-Stelle des Oxids $ABO_3$ ist.

6. Keramikplatte nach einem der Ansprüche 1 bis 5, worin die Kristallkörner aus anorganischen Partikeln bestehen, die zu Kristallkörnern mit isotroper und polyedrischer Form wachsen.

7. Keramikplatte nach einem der Ansprüche 1 bis 5, worin die Kristallkörner aus anorganischen Partikeln bestehen, die zu Kristallkörnern mit anisotroper Form wachsen.

8. Keramikplatte nach einem der Ansprüche 1 bis 7, worin die Kristallkörner aus einem Oxid mit Perowskitstruktur bestehen.

9. Verfahren zur Herstellung einer kristallographisch ausgerichteten Keramik, in der die Kristalle ausgerichtet sind, umfassend:

   einen Mischschritt des Mischens von Pulver, das die Kristallkörner umfasst, die durch Brechen der Keramikplatte nach einem der Ansprüche 1 bis 8 erhalten wurden, und einem Rohmaterialpulver;
   ein Formschritt des Formens des gemischten Pulvers zu einem Formkörper, in dem das die Kristallkörner umfassende Pulver in einer zuvor bestimmten Richtung ausgerichtet ist; und
   einen Brennschritt des Brennens des Formkörpers, so dass sich das Rohmaterialpulver in der zuvor bestimmten Richtung ausrichtet, in der auch das die Kristallkörner umfassende Pulver ausgerichtet ist.

10. Verfahren zur Herstellung einer kristallographisch ausgerichteten Keramik, in der die Kristalle ausgerichtet sind, umfassend:

   einen Stapelschritt des Stapelns der Keramikplatte nach einem der Ansprüche 1 bis 8 und einer Rohmaterialpulverplatte, die Rohmaterialpulver enthält, um einen Formkörper zu bilden; und
   einen Brennschritt des Brennens des Formkörpers, so dass sich das Rohmaterialpulver in der Richtung ausrichtet, in der die in der Keramikplatte enthaltenen Kristallkörner ausgerichtet sind.

11. Verfahren zur Herstellung der kristallographisch ausgerichteten Keramik nach Anspruch 10, worin im Brennschritt der Formkörper unter Druck gebrannt wird, so dass sich das Rohmaterialpulver in der Richtung ausrichtet, in der die in der Keramikplatte enthaltenen Kristallkörner ausgerichtet sind.

**Revendications**

1. Feuille en céramique qui est autosupportée et plane et a une épaisseur de 10 $\mu$m ou moins, dans laquelle, dans la feuille en céramique, en termes de rapport de surface, le pourcentage de la partie qui contient un seul grain cristallin dans la direction de l'épaisseur est de 70 % ou plus, et dans laquelle, dans les grains cristallins, la longueur de grain cristallin dans une direction parallèle à la surface de la feuille est supérieure à la longueur de grain cristallin dans la direction de l'épaisseur, et un plan cristallin spécifique des grains cristallins est orienté dans la surface de la feuille en céramique, le degré d'orientation du plan cristallin spécifique, mesuré par la méthode de Lotgering, étant de 30 % ou plus.

2. Feuille en céramique selon la revendication 1, dans laquelle l'épaisseur de la feuille est de 0,1 à 5 $\mu$m.

3. Feuille en céramique selon la revendication 1 ou 2, dans laquelle les grains cristallins contiennent un oxyde représenté par la formule générale $ABO_3$ en tant que composant principal, où le site A contient au moins un élément choisi parmi Li, Na, K, Bi et Ag, et le site B contient au moins un élément choisi parmi Nb, Ta et Ti.

4. Feuille en céramique selon la revendication 1 ou 2, dans laquelle les grains cristallins contiennent un oxyde représenté par la formule générale $ABO_3$ en tant que composant principal, où le site A contient Pb, et le site B contient au moins un élément choisi parmi Mg, Zn, Nb, Ni, Ti et Zr.

5. Feuille en céramique selon la revendication 3 ou 4, dans laquelle, dans les grains cristallins avant cuisson, le rapport A/B est de 1,0 à 1,3, le rapport A/B étant le rapport du nombre d'atomes au niveau des sites A et B respectifs de l'oxyde $ABO_3$.

6. Feuille en céramique selon l'une quelconque des revendications 1 à 5, dans laquelle les grains cristallins sont composés de particules inorganiques qui croissent en grains cristallins avec une forme isotrope et polyédrique.

7. Feuille en céramique selon l'une quelconque des revendications 1 à 5, dans laquelle les grains cristallins sont composés de particules inorganiques qui croissent en grains cristallins avec une forme anisotrope.

8. Feuille en céramique selon l'une quelconque des revendications 1 à 7, dans laquelle les grains cristallins sont composés d'un oxyde ayant une structure de perovskite.

9. Procédé pour produire une céramique à orientation cristallographique dans laquelle les cristaux sont orientés, comprenant :

   une étape de mélange consistant à mélanger une poudre contenant les grains cristallins, obtenue par broyage de la feuille en céramique selon l'une quelconque des revendications 1 à 8, et une poudre de matière première ;
   une étape de moulage consistant à mettre la poudre mélangée sous la forme d'un corps moulé dans lequel la poudre contenant les grains cristallins est orientée dans une direction prédéterminée ; et
   une étape de cuisson consistant à cuire le corps moulé de façon que la poudre de matière première soit orientée dans la direction prédéterminée dans laquelle la poudre contenant les grains cristallins est orientée.

10. Procédé pour produire une céramique à orientation cristallographique dans laquelle les cristaux sont orientés, comprenant :

    une étape d'empilement consistant à empiler la feuille en céramique selon l'une quelconque des revendications 1 à 8 et une feuille en poudre de matière première contenant une poudre de matière première pour former un corps moulé ; et
    une étape de cuisson consistant à cuire le corps moulé de façon que la poudre de matière première soit orientée dans la direction dans laquelle les grains cristallins contenus dans la feuille en céramique sont orientés.

11. Procédé pour produire une céramique à orientation cristallographique selon la revendication 10, dans lequel, dans l'étape de cuisson, le corps moulé est cuit sous pression de façon que la poudre de matière première soit orientée dans la direction dans laquelle les grains cristallins contenus dans la feuille en céramique sont orientés.

## FIG. 1A

## FIG. 1B

FIG. 2

FIG. 3A

10 μm

FIG. 3B

10 μm

# FIG. 4

# FIG. 5

FIG. 6

FIG. 7A

FIG. 7B

**FIG. 8A**

30
31
32

**FIG. 8B**

32
30
32
30
32

**FIG. 8C**

40

**FIG. 8D**

50
52

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006185940 A
- JP 2006185950 A
- JP 11060333 A
- JP 2003012373 A

**Non-patent literature cited in the description**

- **Saito et al.** *Journal of the European Ceramic Society,* 2007, vol. 27, 4085-7092